# DEMANDE DE BREVET EUROPEEN

(11) **EP 2 002 902 A1**
(43) Date de publication de la demande: **17.12.2008**
(21) Numéro de dépôt: 08156963.4
(22) Date de dépôt: 27.05.2008
(51) Int. Cl.: B09B 3/00, H01J 9/52, C22B 43/00, B01D 5/00

(54) **Procédé de traitement de déchets mercuriels et installation pour sa mise en oeuvre**

(30) Priorité: 15.06.2007 FR 0704297
(71) Demandeur: Centre international de traitements et de recyclage des ordures nocives (CITRON), 76700 Rogerville (FR)
(72) Inventeur: Brüggler, Michael, 8008 Zürich (CH)
(74) Mandataire: Bentz, Jean-Paul

(57) **Abrégé**

L'invention concerne un procédé de traitement de déchets contenant du mercure et à base de matériau inerte dans les conditions de vaporisation du mercure.

Selon l'invention, ce procédé comporte une étape de vaporisation du mercure consistant à porter les déchets à une température au moins égale à la température de vaporisation du mercure, une étape de condensation des gaz issus de l'étape de vaporisation du mercure, et une étape de décantation du condensat obtenu, pour séparer le mercure du reste du condensat.

L'invention concerne aussi une installation pour le traitement de déchets contenant du mercure et à base de matériau inerte dans les conditions de vaporisation du mercure, comportant un four, un laveur de gaz, une cuve de décantation, et un filtre à charbon actif.

## Description

La présente invention concerne, de façon générale, le domaine du traitement de déchets mercuriels.

Plus précisément, l'invention concerne, selon un premier de ses aspects, un procédé de traitement de déchets contenant du mercure et à base de matériau inerte dans les conditions de vaporisation du mercure.

Classiquement, ces déchets mercuriels sont stockés en fûts étanches qui sont eux-mêmes enfouis en mine de sel. Un tel stockage présente des limitations évidentes.

Dans ce contexte, la présente invention a pour but de proposer un procédé de traitement de déchets mercuriels permettant la récupération et la réutilisation du mercure.

A cette fin, le procédé selon l'invention, de traitement de déchets contenant du mercure et à base de matériau inerte dans les conditions de vaporisation du mercure, est essentiellement caractérisé en ce qu'il comporte :
- une étape de vaporisation du mercure consistant à porter les déchets à une température au moins égale à la température de vaporisation du mercure,
- une étape de condensation des gaz issus de l'étape de vaporisation du mercure, et
- une étape de décantation du condensat obtenu, pour séparer le mercure du reste du condensat.

Ce procédé présente un coût de mise en oeuvre qui n'est pas significativement supérieur à celui de l'enfouissement, tout en proposant une solution plus satisfaisante en termes de respect de l'environnement.

Dans un mode de réalisation préféré de l'invention, le procédé inclut en outre une étape de filtration, sur filtre à charbon actif, de gaz résiduels issus de l'étape de condensation.

De manière avantageuse, l'étape de condensation se fait par au moins un lavage à l'eau des gaz, de préférence par deux lavages successifs à l'eau.

De préférence, le procédé inclut en outre une étape de cassage des déchets pour libérer le mercure, précédant l'étape de vaporisation du mercure.

Les déchets sont notamment des lampes, telles que des lampes à vapeur de mercure.

L'étape de vaporisation du mercure consiste avantageusement à porter les déchets à une température comprise entre 400 et 1000°C, et de préférence à une température de l'ordre de 650°C.

De manière avantageuse, le mercure séparé par l'étape de décantation est recyclé.

Une fraction liquide intermédiaire issue de l'étape de décantation peut être traitée par filtration, dans un filtre-presse par exemple.

Une boue obtenue par le traitement par filtration peut être réintroduite au niveau de l'étape de vaporisation du mercure.

Selon une version préférée de l'invention, une fraction liquide surnageante issue de la décantation est refroidie, par exemple par passage dans un échangeur eau-air, puis réintroduite au niveau de l'étape de condensation.

De préférence, la fraction liquide surnageante issue de la décantation est refroidie à une température de l'ordre de 70°C.

Après l'étape de filtration, les gaz résiduels peuvent être rejetés dans l'atmosphère.

Le matériau inerte comprend notamment du verre.

L'invention concerne également une installation, adaptée à la mise en oeuvre du procédé selon l'invention, pour le traitement de déchets contenant du mercure et à base de matériau inerte dans les conditions de vaporisation du mercure. Cette installation est essentiellement caractérisée en ce qu'elle comporte .
- un four pour évaporer le mercure, en aval duquel se trouve
- un laveur de gaz pour laver les gaz issus du four, en aval duquel se trouve
- d'une part une cuve de décantation pour la décantation de la partie liquide issue du laveur, ladite cuve incluant au moins une sortie basse, une sortie intermédiaire et une sortie haute, et
- d'autre part un filtre à charbon actif pour filtrer les gaz résiduels issus du laveur.

L'installation peut comprendre en outre un moyen d'évacuation vers l'atmosphère, en aval du filtre à charbon actif.

Elle comprend en outre avantageusement un filtre-presse en aval de la sortie intermédiaire de la cuve de décantation.

De préférence, l'installation selon l'invention comprend en outre une première voie de recirculation, pour la recirculation d'une portion liquide surnageante issue de la décantation, de la sortie haute de la cuve de décantation vers le laveur de gaz.

De manière avantageuse, elle comprend en outre une deuxième voie de recirculation, pour la recirculation de boues issues du filtre-presse, du filtre-presse vers le four.

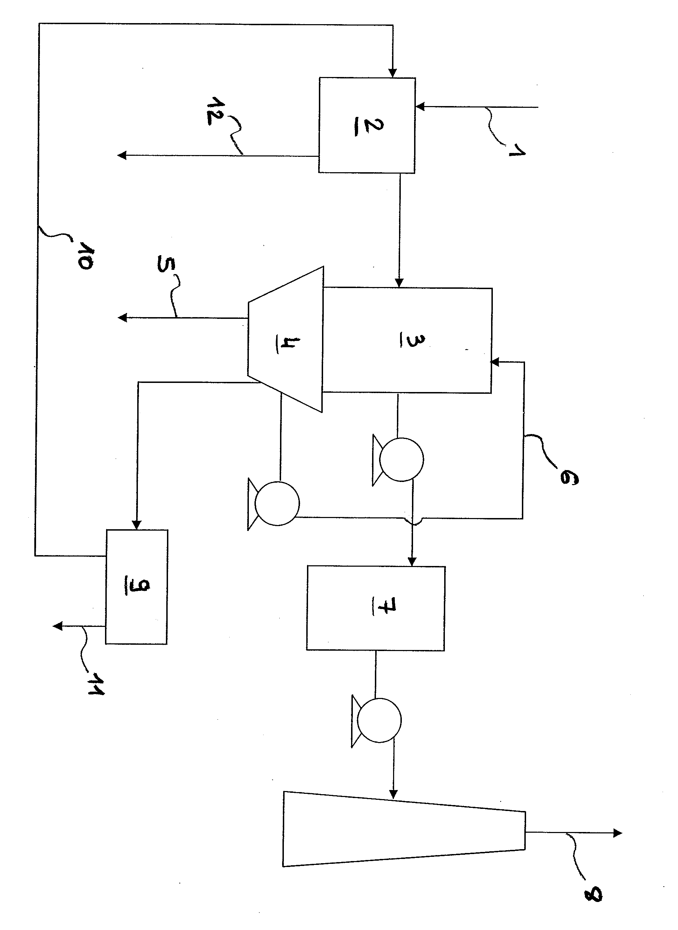

D'autres caractéristiques et avantages de l'invention ressortiront clairement de la description détaillée qui en est faite ci-après, à titre indicatif et nullement limitatif, en référence à la figure 1 annexée représentant schématiquement un mode de réalisation du procédé selon l'invention.

Des déchets, contenant du mercure et à base de matériau inerte dans les conditions de vaporisation du mercure, sont amenés en entrée 1, dans un four.

Dans ce four, ils subissent d'abord une étape de vaporisation 2 du mercure, consistant à porter les déchets à une température au moins égale à la température de vaporisation du mercure.

Plus particulièrement, l'étape de vaporisation 2 consiste à porter les déchets à une température comprise entre 400 et 1000°C, et de préférence à une température de l'ordre de 650°C. La température de 650°C permet d'offrir le meilleur compromis entre une consommation énergétique limitée et une réaction de vaporisation rapide.

Les gaz issus de l'étape de vaporisation 2 du mercure subissent alors une étape de condensation 3.

Cette étape 3 est réalisée avantageusement dans un laveur de gaz. Le liquide de lavage est préférentiellement de l'eau. Au moins un lavage à l'eau des gaz est réalisé dans le laveur. De préférence, on effectue deux lavages successifs, tel que dans un laveur en U.

Le condensat obtenu est soumis à une étape de décantation 4, pour en séparer le mercure.

Pour cette étape 4, une cuve de décantation est placée en aval du laveur de gaz.

Le mercure est extrait du procédé à la sortie 5, correspondant à la sortie basse de la cuve. Il peut alors être réutilisé.

L'étape de décantation 4 fournit une fraction liquide surnageante, extraite en sortie haute de la cuve. Cette fraction peut être réintroduite, par la voie de recirculation 6, au niveau de l'étape de condensation 3. Avant sa réintroduction, elle est de préférence refroidie, par exemple par passage dans un échangeur eau-air. Elle est tout préférentiellement refroidie à une température de l'ordre de 70°C. Elle est ainsi réutilisée dans le procédé comme liquide de lavage pour l'étape de condensation 3.

Les gaz résiduels issus de l'étape de condensation 3 sont soumis à une étape de filtration 7. Cette étape 7 se fait de manière préférée sur filtre à charbon actif. Elle permet d'adsorber sur le filtre d'éventuels restes de mercure.

Après l'étape de filtration 7, les gaz résiduels peuvent être rejetés dans l'atmosphère à la sortie 8, en ce que leur contenu, en particulier en mercure, est en conformité avec les exigences relatives aux rejets atmosphériques. Les gaz sont éventuellement analysés et contrôlés avant rejet.

Une cheminée peut être notamment placée en aval du filtre à charbon actif, comme moyen d'évacuation des gaz résiduels dans l'atmosphère.

Une fraction liquide intermédiaire est également extraite de l'étape de décantation 4 pour subir une filtration 9. Cette fraction comprend des poussières, qui ont pu être séparées du mercure grâce à l'étape de condensation 3.

La filtration 9 est faite tout préférentiellement dans un filtre-presse, placé en aval de la sortie intermédiaire de la cuve de décantation.

La boue obtenue par le traitement par filtration 9 est réintroduite, par la voie de recirculation 10, au niveau de l'étape de vaporisation 2 du mercure.

Le procédé de l'invention peut être réalisé en continu, avec un apport continu de déchets.

Les déchets traités par un procédé selon l'invention sont en particulier des lampes, et plus particulièrement des lampes à vapeur de mercure, telles que les lampes à décharge haute pression et les lampes fluorescentes.

Les déchets traités sont à base de matériau inerte dans les conditions de vaporisation du mercure. Ce matériau comprend en particulier du verre.

Par exemple, le traitement de lampes par le procédé de l'invention génère un résidu contenant principalement du verre en sortie de l'étape d'évaporation 2. Ce résidu est extrait du procédé en sortie 12 et peut être réutilisé. Par exemple, après extraction, il est fondu et utilisé en technique routière, dans les soubassements de route.

Le cas échéant, en amont du procédé, avant l'étape de vaporisation 2, les déchets sont cassés, manuellement ou mécaniquement, en bétonnière par exemple, dans le but d'en libérer le mercure qui pourra alors s'extraire du reste des déchets au moment de l'étape 2.

L'invention permet de récupérer de l'ordre de 99% du mercure contenu initialement dans les déchets traités, à la suite de l'étape de décantation. Ce rendement est de l'ordre de 100% en sortie de l'étape de filtration sur filtre à charbon actif.

Le mercure, ainsi que les restes de déchets débarrassés de ce mercure, récupérés en sortie de procédé peuvent être réutilisés. Ainsi, le procédé de l'invention présente un impact environnemental réduit.

## Revendications

1. Procédé de traitement de déchets contenant du mercure et à base de matériau inerte dans les conditions de vaporisation du mercure, lesdits déchets étant des lampes, et ledit procédé étant **caractérisé en ce qu'**il comporte :
- une étape de cassage des déchets pour libérer le mercure,
- une étape de vaporisation (2) du mercure consistant à porter les déchets cassés à une température au moins égale à la température de vaporisation du mercure,
- une étape de condensation (3) des gaz issus de l'étape de vaporisation du mercure, et
- une étape de décantation (4) du condensat obtenu, pour séparer le mercure du reste du condensat,
et **en ce qu'**une fraction liquide intermédiaire issue de l'étape de décantation (4) est traitée par filtration (9), dans un filtre-presse par exemple, et qu'une boue obtenue par ledit traitement par filtration (9) est réintroduite au niveau de l'étape de vaporisation (2) du mercure.

2. Procédé selon la revendication 1, incluant en outre une étape de filtration (7), sur filtre à charbon actif, de gaz résiduels issus de l'étape de condensation (3).

3. Procédé selon la revendication 1 ou 2, dans lequel l'étape de condensation (3) se fait par au moins un lavage à l'eau des gaz, de préférence par deux lavages successifs à l'eau.

4. Procédé selon l'une quelconque des revendications 1 à 3, dans lequel l'étape de vaporisation (2) du mercure consiste à porter les déchets à une température comprise entre 400 et 1000°C, et de préférence à une température de l'ordre de 650°C.

5. Procédé selon l'une quelconque des revendications 1 à 4, dans lequel le mercure séparé par l'étape de décantation (4) est recyclé.

6. Procédé selon l'une quelconque des revendications 1 à 5, dans lequel une fraction liquide surnageante issue de l'étape de décantation (4) est refroidie, par exemple par passage dans un échangeur eau-air, puis réintroduite au niveau de l'étape de condensation.

7. Procédé selon la revendication 6, dans lequel la fraction liquide surnageante issue de la décantation est refroidie à une température de l'ordre de 70°C.

8. Procédé selon l'une quelconque des revendications 2 à 7, dans lequel, après l'étape de filtration (7), les gaz résiduels sont rejetés dans l'atmosphère.

9. Procédé selon l'une quelconque des revendications 1 à 8, dans lequel le matériau inerte comprend du verre.

10. Installation pour le traitement de déchets contenant du mercure et à base de matériau inerte dans les conditions de vaporisation du mercure, lesdits déchets étant des lampes, et ladite installation étant **caractérisée en ce qu'**elle comporte :
- un four pour évaporer le mercure, en aval duquel se trouve
- un laveur de gaz pour laver les gaz issus du four, en aval duquel se trouve
- une cuve de décantation pour la décantation de la partie liquide issue du laveur, ladite cuve incluant au moins une sortie basse, une sortie intermédiaire et une sortie haute,
- un filtre-presse en aval de la sortie intermédiaire de la cuve de décantation, et
- une deuxième voie de recirculation, pour la recirculation de boues issues du filtre-presse, du filtre-presse vers le four.

11. Installation selon la revendication 10, incluant en outre en aval du laveur de gaz un filtre à charbon actif pour filtrer les gaz résiduels issus dudit laveur.

12. Installation selon la revendication 11, comprenant en outre un moyen d'évacuation vers l'atmosphère, en aval du filtre à charbon actif.

13. Installation selon l'une quelconque des revendications 10 à 12, comprenant en outre une première voie de recirculation, pour la recirculation d'une portion liquide surnageante issue de la décantation, de la sortie haute de la cuve de décantation vers le laveur de gaz.
